# EUROPÄISCHE PATENTSCHRIFT

(11) **EP 0 444 515 B1**
(45) Veröffentlichungstag und Bekanntmachung des Hinweises auf die Patenterteilung: **26.11.1997**
(21) Anmeldenummer: 91102446.1
(22) Anmeldetag: 20.02.1991
(51) Int. Cl.: C08G 65/48, B01D 17/05

(54) **Als Demulgatoren von Öl-in-Wasser-Emulsionen geeignete Kondensationsprodukte**
Condensation products useful as demulsifying agents for oil-in-water emulsions
Produits de condensation utiles en tant que désémulsifiants pour émulsions aqueuses

(30) Priorität: 28.02.1990 DE 4006255
(43) Veröffentlichungstag der Anmeldung: 04.09.1991
(73) Patentinhaber: BASF Aktiengesellschaft, 67063 Ludwigshafen (DE)
(72) Erfinder: Fikentscher, Rolf, Dr., W-6700 Ludwigshafen (DE); Oppenlaender, Knut, Dr., W-6700 Ludwigshafen (DE); Dix, Johannes Peter, Dr., W-6719 Weisenheim (DE); Sager, Wilfried, Dr., W-6704 Mutterstadt (DE); Vogel, Hans-Henning, Dr., W-6710 Frankenthal (DE); Elfers, Guenther, W-6943 Birkenau (DE)

(56) Entgegenhaltungen:
- EP-A- 0 223 064
- DE-A- 3 829 974
- GB-A- 1 318 564
- US-A- 2 407 895
- US-A- 4 731 481

## Beschreibung

Die vorliegende Erfindung betrifft als Demulgatoren von öl-in-Wasser-Emulsionen geeignete Kondensationsprodukte aus
A) einem Präkondensat aus einem oder mehreren Trialkanolaminen der allgemeinen Formel I 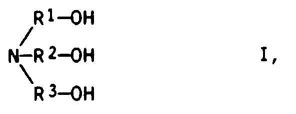 in der die Reste R¹ bis R³ für gleiche oder unterschiedliche 1,2-Alkylengruppen mit 2 bis 4 C-Atomen stehen, und
B) 0,1 bis 30 Gew.-%, bezogen auf das Präkondensat, einer oder mehrerer der folgenden Verbindungen II:
   a) Harnstoff oder einem Harnstoffderivat der allgemeinen Formel IIa 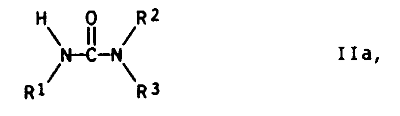
   b) einem Harnstoffderivat der allgemeinen Formel IIb 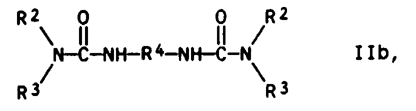 in denen
      - R¹: Wasserstoff, eine C₁- bis C₂₀-Alkylgruppe oder eine C₂- bis C₂₀-Alkenylgruppe,
      - R² und R³: gleich oder verschieden sein können und Wasserstoff oder eine C₁- bis C₄-Alkylgruppe,
      - R⁴: eine C₁- bis C₁₂-Alkylengruppe
      bedeuten.

Außerdem betrifft die Erfindung ein Verfahren zur Herstellung der Kondensationsprodukte und deren Verwendung als Demulgatoren von Öl-in-Wasser-Emulsionen.

Bei der Förderung und Weiterverarbeitung von Rohöl fallen in großen Mengen Öl-in-Wasser-Emulsionen an, wobei die kontinuierliche äußere Phase von den Mengenverhältnissen Wasser zu Öl, dem natürlichen, im Öl enthaltenen Emulgatorsystem und der Entstehungsgeschichte der Emulsion abhängt. Bei der Förderung fällt der größte Teil des Rohöls als Wasser-in-Öl-Emulsion an und muß durch Zugabe chemischer Demulgatoren gespalten werden. Das abgetrennte Salzwasser enthält noch gewisse Mengen Restöl, wobei sich bevorzugt Öl-in-Wasser-Emulsionen bilden.

In noch stärkerem Maße treten Öl-in-Wasser-Emulsionen während der Weiterverarbeitung des Rohöls auf den Feldern und in den Raffinerien auf. Die Menge an emulgiertem Rohöl in den Öl-in-Wasser-Emulsionen kann bis zu 5 % betragen. Zur Abtrennung dieses Restölgehaltes werden spezielle Demulgatoren, sogenannte Deoiler, verwendet, wobei es sich meist um kationische Polymere handelt, wie sie z.B. in DE-34 04 538 beschrieben werden. Typische Produkte werden ebenfalls in den US-Patentschriften 3 528 928, 4 333 947 und 3 893 615 beschrieben.

Die Abtrennung von Restölmengen ist für die Ölfeldwasserklärung und -aufbereitung aus ökologischen und technischen Gründen notwendig, da beispielsweise bei der Verwendung des Wassers zur Sekundärförderung durch Wasserfluten Restölmengen im Wasser den Einpreßdruck erhöhen würden.

Aus der US-Patentschrift 2 407 895 ist ein Verfahren zur Spaltung von Öl-in-Wasser-Emulsionen mit vergleichsweise niedermolekularen Kondensaten aus Alkanolaminen, hergestellt durch Kondensation in Gegenwart basischer Katalysatoren bekannt.

In den US-Patentschriften 4 179 396 und 4 383 933 werden weiter Deoiler aus Aluminiumsalzen oder Titantetrachlorid und Alkanolamin-Kondensaten beschrieben, die gegebenenfalls teilweise acyliert oder quaterniert worden sind.

Aus den US-Patentschriften 4 505 839 und 4 731 481 sind außerdem quaternierte und niedermolekulare Alkanolamin-Polykondensate als Deoiler bekannt, die durch katalytische Umsetzung mit ZnCl₂/Essigsäure oder Al₂(SO₄)₃/Essigsäure erhalten worden sind.

Weiter werden in den US-Patentschriften 4 404 362 und 4 459 220 Block-Polykondensate, die durch Kondensation von getrennt durch katalytische Umsetzung mit Lewis- oder Mineralsäuren hergestellten Triethanolamin-Polykondensaten und Triisopropanolamin-Polykondensaten erhalten werden, beschrieben.

Die bekannten Demulgatoren sind jedoch nicht befriedigend.

Demgemäß wurden die eingangs definierten Kondensationsprodukte gefunden, die an universeller Anwendbarkeit und Spaltgeschwindigkeit den bekannten Deoilern überlegen sind. Sie enthalten keine Metallsalze, insbesondere Chloride, die korrosionsfördernd wirken können. Im Gegensatz zu Deoilern, die durch Kondensation in Gegenwart von Carbonsäuren erhalten worden sind, enthalten die erfindungsgemäßen Demulgatoren keine für die Wirksamkeit nachteiligen Carbonsäureester-Gruppen.

Bevorzugt und besonders wirksam sind solche Kondensationsprodukte, bei denen als Präkondensate A Trialkanolaminpolyether, erhältlich durch Kondensation von einem oder mehreren Trialkanolaminen der allgemeinen Formel I 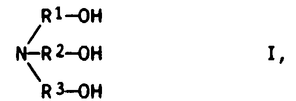 in der die Reste R¹ bis R³ für gleiche oder unterschiedliche 1,2-Alkylengruppen mit 2 bis 4 C-Atomen stehen, in Gegenwart von phosphoriger Säure und/oder unterphosphoriger Säure, verwendet werden.

Die für die Herstellung der erfindungsgemäßen Kondensationsprodukte verwendeten Präkondensate A werden zweckmäßig in der Weise hergestellt, daß man die Trialkanolamine I, vorzugsweise Triethanolamin oder Triisopropanolamin N[CH₂-CH(CH₃)-OH]₃, oder Gemische von mehreren Trialkanolaminen, in Gegenwart von sauren Katalysatoren bei erhöhten Temperaturen kondensiert. Als saure Katalysatoren verwendet man vorzugsweise phosphorige Säure (H₃PO₃) und/oder unterphosphorige Säure (H₃PO₂). Die sauren Katalysatoren werden, gerechnet als 100 %, zweckmäßig in einer Menge von 0,05 bis 2 Gew.-%, vorzugsweise 0,1 bis 1 Gew.-%, bezogen auf das zu kondensierende Trialkanolamin eingesetzt.

Im allgemeinen werden Kondensationstemperaturen von 120 bis 280°C, vorzugsweise 150 bis 260°C, insbesondere 180 bis 240°C angewandt. Die Reaktionsdauer beträgt im allgemeinen 1 bis 10 Stunden, vorzugsweise 4 bis 8 Stunden. Zweckmäßig wird die Kondensation durch Variation der Temperatur und/oder Reaktionsdauer in der Weise durchgeführt, daß die Viskosität beim Einsatz von Triethanolamin für den erhaltenen Triethanolaminpolyether im Bereich von 10.000 bis 100.000 mPa·s, vorzugsweise 20.000 bis 50.000 mPa·s liegt, für Triisopropanolaminpolyether im Bereich von 100.000 bis 1.000.000 mPa·s, vorzugsweise 200.000 bis 600.000 mPa·s, liegt und für ein Mischkondensat aus bevorzugt äquimolaren Mengen Triethanolamin und Triisopropanolamin im Bereich von 80.000 bis 400.000 mPa·s, vorzugsweise 100.000 bis 300.000 mPa·s, liegt (jeweils gemessen in unverdünntem Zustand bei 20°C).

Die erhaltenen Präkondensate A werden mit einer oder mehreren Verbindungen IIa bis IIb zu den erfindungsgemäßen Kondensationsprodukten umgesetzt.

Als Verbindungen der allgemeinen Formel IIa 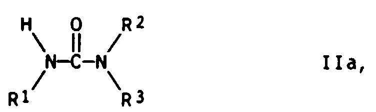 kommen, falls R¹ eine Alkylgruppe ist, vorzugsweise solche in Betracht, bei denen R¹ eine C₁- bis C₁₀-Alkylgruppe, insbesondere eine C₁- bis C₄-Alkylgruppe ist.

Als Beispiele seien genannt Harnstoffe wie Harnstoff, N-Methylharnstoff, N-Ethylharnstoff, N-Propylharnstoff, N-Butylharnstoff, N,N'-Dimethylharnstoff, N,N'-Diethylharnstoff, N,N'-Dipropylharnstoff, N,N'-Dibutylharnstoff, N-(2-Ethylhexyl)harnstoff, N-iso-Nonylharnstoff, N-iso-Tridecylharnstoff, N-Laurylharnstoff, N-Myristylharnstoff, N-Palmitylharnstoff, N-Stearylharnstoff, N-Oleylharnstoff, N-Linolylharnstoff, N-Linolenylharnstoff. Bevorzugt werden monosubstituierte Harnstoffe, und vor allem unsubstituierter Harnstoff.

Beispiele für Verbindungen der allgemeinen Formel IIb sind Bisharnstoffe wie Methylendiharnstoff, Ethylen-1,2-diharnstoff, Propylen-1,3-diharnstoff, Butylen-1,4-diharnstoff, Pentamethylen-1,5-diharnstoff, Hexamethylen-1,6-diharnstoff. Bevorzugt werden Bisharnstoffe mit einer Alkylenbrücke R⁴ mit 1 bis 10 C-Atomen.

Die Umsetzung eines Präkondensats aus Triethanolamin mit den Verbindungen IIa und IIb erfolgt im allgemeinen bei Temperaturen von 100 bis 210°C, vorzugsweise 140 bis 200°C, zweckmäßig ohne Lösungsmittel bis zu einer Viskosität von im allgemeinen 20.000 bis 300.000 mPa·s, vorzugsweise 28.000 bis 150.000 mPa·s.

Die Umsetzung eines Präkondensats aus Triisopropanolamin mit den Verbindungen IIa und IIb erfolgt im allgemeinen bei Temperaturen von 100 bis 210°C, vorzugsweise 140 bis 200°C, zweckmäßig ohne Lösungsmittel bis zu einer Viskosität von im allgemeinen mehr als 500.000 mPa·s.

Die Umsetzung eines Präkondensats aus einem Gemisch von Triethanolamin und Triisopropanolamin, vorzugsweise im molaren Verhältnis 1:1, mit den Verbindungen IIa und IIb erfolgt im allgemeinen bei Temperaturen von 100 bis 210°C, vorzugsweise 140 bis 200°C, zweckmäßig ohne Lösungsmittel bis zu einer Viskosität von im allgemeinen mehr als 300.000 mPa·s.

Die erfindungsgemäßen Kondensationsprodukte werden den Öl-in-Wasser-Emulsionen zum Brechen der Emulsion zweckmäßig in Mengen von 1 bis 100 Gew.-ppm, vorzugsweise 1 bis 30 Gew.-ppm, insbesondere 2 bis 10 Gew.-ppm, zugesetzt.

### Beispiele

Die in den Synthesebeispielen und dem Anwendungsbeispiel verwendeten Prozentangaben beziehen sich auf das Gewicht, wenn nicht anders angegeben. Die Viskositäten wurden in einem Rotationsviskosimeter (Haake, Rotavisco) bei 20°C gemessen.

### Synthesebeispiele

### Synthesebeispiel 1

1788 g Triethanolamin und 12 g unterphosphorige Säure (50%ige wäßrige Lösung) wurden unter Rühren und Durchleiten eines schwachen Stickstoffstroms auf 225 bis 230°C erwärmt. Das bei der Reaktion gebildete Wasser wurde abdestilliert. Nach 7 bis 8 Stunden wurde die Kondensation bei einer Viskosität von 21.000 mPa·s durch Kühlung auf Raumtemperatur abgebrochen. Es wurden 1492 g Triethanolamin-Kondensat erhalten (Aminzahl: 7,69 mmol/g).

130 g dieses Triethanolaminpolyethers wurden mit 3,0 g Harnstoff (entsprechend 5 mol-%) unter Rühren und Stickstoff auf 170 bis 180°C erwärmt und bis zur Beendigung der Ammoniakentwicklung 6 Stunden bei dieser Temperatur gehalten. Das so erhaltene Urethan hatte eine Viskosität von 41.000 bis 45.000 mPa·s.

### Synthesebeispiel 2

260 g eines Triethanolamin-Präkondensats (Aminzahl: 7,69 mmol/g) der Viskosität 19.900, hergestellt wie in Synthesebeispiel 1, und 10,1 g Hexamethylen-1,6-diharnstoff (entsprechend 2,5 mol-%) wurden unter Stickstoff 2 Stunden bei 160°C und danach 4 Stunden bei 180°C bis zur Beendigung der Ammoniakentwicklung gerührt. Die Viskosität des resultierenden Kondensationsproduktes betrug 63.000 mPa·s.

### Synthesebeispiel 3

131,2 g eines Triethanolamin-Präkondensats (Aminzahl: 7,62 mmol/g) der Viskosität 20.400 mPa·s, hergestellt wie in Synthesebeispiel 1, und 36,3 g iso-Tridecylharnstoff (entsprechend 15 mol-%) wurden unter Stickstoff 1,5 Stunden bei 165°C und anschließend 5 Stunden bei 180°C bis zur Beendigung der Ammoniakentwicklung gerührt. Die Viskosität des Kondensationsproduktes betrug 34.800 mPa·s.

### Synthesebeispiel 4

670,5 g Triethanolamin und 860,7 g Triisopropanolamin (jeweils 4,5 mol) wurden zusammen mit 9,0 g unterphosphoriger Säure (50%ige wäßrige Lösung) unter Durchleiten eines schwachen Stickstoffstroms bei 220°C gerührt. Das bei der Reaktion gebildete Wasser wurde abdestilliert. Nach 7 bis 8 Stunden wurde die Kondensation bei einer Viskosität von 174.600 mPa·s durch Kühlung auf Raumtemperatur abgebrochen. Man erhielt 1332 g Mischkondensat (Aminzahl: 6,46 mmol/g).

309,6 g dieses Mischkondensats wurden mit 6,0 g Harnstoff (entsprechend 5 mol-%) unter Rühren und Stickstoff auf 170 bis 180°C erwärmt und bis zur Beendigung der Ammoniakentwicklung 5 Stunden bei dieser Temperatur gehalten. Das erhaltene Kondensationsprodukt hatte eine Viskosität von 383.000 mPa·s.

### Synthesebeispiel 5

1530 g Triisopropanolamin und 8,0 g unterphosphorige Säure (50%ige wäßrige Lösung) wurden analog den Synthesebeispielen 1 und 4 unter Rühren und Durchleiten eines schwachen Stickstoffstroms auf 200 bis 225°C erwärmt. Das bei der Reaktion gebildete Wasser wurde abdestilliert. Die Kondensation wurde bei einer Viskosität von 390.000 mPa·s durch Kühlung auf Raumtemperatur abgebrochen.

359,6 g dieses Triisopropanolamin-Präkondensats (Aminzahl: 5,56 mmol/g) wurden mit 6,0 g Harnstoff (entsprechend 5 mol-%) unter Rühren und unter Stickstoff auf 170 bis 180°C erwärmt und bis zur Beendigung der Ammoniakentwicklung 5 Stunden bei dieser Temperatur gehalten. Beim Abkühlen auf Raumtemperatur wurde das Kondensationsprodukt fest.

### Anwendungsbeispiel

1000 mg eines Röhöls wurden in 1 l Wasser mit Hilfe eines Ultra-Turrax-Gerätes bei 10.000 UPM (Umdrehungen pro Minute) dispergiert. Anschließend wurden jeweils 150 ml der erhaltenen Öl-in-Wasser-Emulsion in einen 250-ml-Tropftrichter übergeführt und mit einer 2,5 gew.-%igen Dosierlösung des gemäß Synthesebeispiel 1 erhaltenen Demulgators versetzt. Es wurden Dosierungen des Demulgators von 1, 2,5, 5, und 10 Gew.-ppm., bezogen auf die Öl-in-Wasser-Emulsion, verwendet. Die mit dem Demulgator versetzte Rohölemulsion wurde im Tropftrichter jeweils 50mal kräftig geschüttelt und 10 Minuten absitzen lassen. Danach wurd der Restrohölgehalt in einer unten aus dem Tropftrichter entnommenen Wasserprobe bestimmt. Die Bestimmung erfolgte durch photometrische Bestimmung des Restöls (IR-Absorption) in einem CCl₄-Extrakt der entnommenen Wasserprobe (Horiba-Gerät).

Die Versuchsergebnisse sind in der folgenden Tabelle aufgelistet:

| Demulgator | Dosierung des Demulgators | Restrohölgehalt |
|---|---|---|
| mit Harnstoff vernetzter Tri- ethanolpolyether gemäß Synthese- beispiel 1 | 1 Gew.-ppm | 112 Gew.-ppm |
| | 2,5 " | 65 " |
| | 5 " | 60 " |
| | 10 " | 58 " |
| | | |
| | Rohölgehalt (Blindwert) der nicht behandelten Emulsion | 967 Gew.-ppm |

Die erfindungsgemäße Verwendung des Demulgators zeigt besonders gute Ergebnisse bei einer Dosierung im Bereich von 2,5 bis 10 Gew.-ppm.

## Patentansprüche

1. Als Demulgatoren von Öl-in-Wasser-Emulsionen geeignete Kondensationsprodukte aus
A) einem Präkondensat aus einem oder mehreren Trialkanolaminen der allgemeinen Formel I 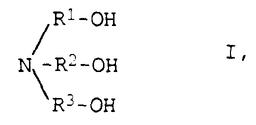 in der die Reste R¹ bis R³ für gleiche oder unterschiedliche 1,2-Alkylengruppen mit 2 bis 4 C-Atomen stehen, und
B) 0,1 bis 30 Gew.-%, bezogen auf das Präkondensat, einer oder mehrerer der folgenden Verbindungen II:
a) Harnstoff oder einem Harnstoffderivat der allgemeinen Formel IIa 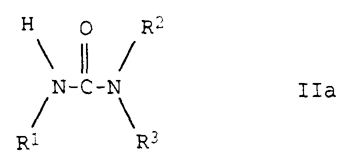 und/oder
b) einem Harnstoffderivat der allgemeinen Formel IIb 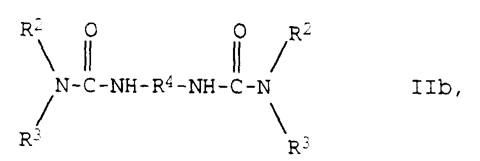 in denen
R¹ Wasserstoff, eine C₁- bis C₂₀-Alkylgruppe oder eine C₂- bis C₂₀-Alkenylgruppe,
R² und R³ gleich oder verschieden sein können und Wasserstoff oder eine C₁- bis C₄-Alkylgruppe und
R⁴ eine C₁- bis C₁₂-Alkylengruppe
bedeuten.

2. Verfahren zur Herstellung der Kondensationsprodukte gemäß Anspruch 1, dadurch gekennzeichnet, daß man ein Präkondensat A aus einem oder mehreren Trialkanolaminen I mit einer oder mehreren Verbindungen B in einer Menge von 0,1 bis 30 Gew.-%, bezogen auf das Präkondensat, umsetzt.

3. Verwendung der Kondensationsprodukte gemäß Anspruch 1 oder 2 als Demulgatoren von Öl-in-Wasser-Emulsionen.

## Claims

1. A condensate, which is suitable as demulsifier of oil-in-water emulsions, composed of
A) a precondensate of one or more trialkanolamines of the formula I 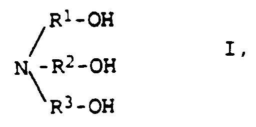 where the R¹ to R³ radicals are identical or different 1,2-alkylene groups having 2 to 4 carbon atoms, and
B) 0.1 - 30% by weight, based on the precondensate, of one or more of the following compounds II:
a) urea or a urea derivative of the formula IIa 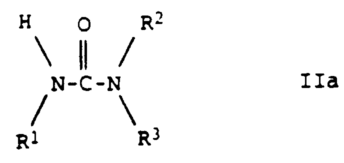 and/or
b) a urea derivative of the formula IIb 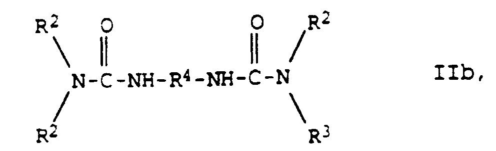 where
R¹ is hydrogen, a C₁-C₂₀-alkyl group or a C₂-C₂₀-alkenyl group,
R² and R³ can be identical or different and are hydrogen or a C₁-C₄-alkyl group and
R⁴ is a C₁-C₁₂-alkyl group.

2. A process for preparing a condensate as claimed in claim 1, which comprises reacting a precondensate A of one or more trialkanolamines I with one or more compounds B in an amount of from 0.1 to 30% by weight, based on the precondensate.

3. The use of a condensate as set forth in claim 1 or 2 as demulsifier of oil-in-water emulsions.

## Revendications

1. Produits de condensation utilisables en tant que désémulsifiant pour des émulsions huile-dans-eau, constitués à partir
A) d'un précondensat, formé à partir d'une ou plusieurs trialcanolamines de formule générale I 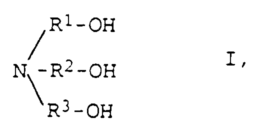 dans laquelle les restes R¹ à R³ sont mis pour des groupements 1,2-alkylène à 2-4 atomes de carbone, identiques ou différents, et
B) de 0,1 à 30 % en poids, par rapport au précondensat, d'un ou plusieurs des composés II suivants :
a) l'urée ou un dérivé de l'urée de formule générale IIa 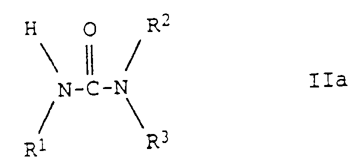 et/ou
b) un dérivé de l'urée de formule générale IIb 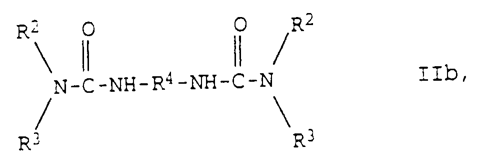 dans lesquelles
R¹ est mis pour un atome d'hydrogène, un groupement alkyle en C₁-C₂₀ ou un groupement alcényle en C₂-C₂₀,
R² et R³ peuvent être identiques ou différents et sont mis pour des atomes d'hydrogène ou des groupements alkyle en C₁-C₄ et
R⁴ est mis pour un groupement alkyle en C₁-C₁₂.

2. Procédé de préparation de produits de condensation selon la revendication 1, caractérisé en ce que l'on fait réagir un précondensat A, formé à partir d'une ou plusieurs trialcanolamines I, avec un ou plusieurs composés B en une quantité de 0,1 à 30 % en poids, par rapport au précondensat.

3. Utilisation de produits de condensation selon la revendication 1 ou 2 en tant que désémulsifiant pour des émulsions huile-dans-eau.
